# EUROPEAN PATENT APPLICATION

(11) **EP 1 548 638 A2**
(43) Date of publication of application: **29.06.2005**
(21) Application number: 04029715.2
(22) Date of filing: 15.12.2004
(51) Int. Cl.: G06K 19/07, G06K 7/00

(54) **A secure device and information processing apparatus**

(30) Priority: 15.12.2003 JP 2003416380; 07.06.2004 JP 2004168282
(71) Applicant: MATSUSHITA ELECTRIC INDUSTRIAL CO., LTD., Kadoma-shi, Osaka 571-8501 (JP)
(72) Inventor: Minemura, Atsushi, Tokyo 173-0031 (JP)
(74) Representative: Grünecker, Kinkeldey, Stockmair & Schwanhäusser Anwaltssozietät

(57) **Abstract**

An IC card including a first communications unit, a second communications unit and a card application unit further includes an information passing unit accessible to all card applications. The card application generates transmit information based on an instruction from an external R/W received via the first communications unit and writes the information into the information passing unit. The information passing unit passes the transmit information to a cell phone based on an instruction from the cell phone received via the second communications unit. The cell phone, after completion of the card processing of the IC card, may access the information passing unit to acquire information on the card processing. The IC card passes transmit information based on an instruction from the cell phone, which processing conforms to international standards.

## Description

### BACKGROUND OF THE INVENTION

### 1. Field of the Invention

The present invention relates to a secure device such as an IC card and an information processing apparatus such as a cell phone, which mounts the secure device. The information processing apparatus efficiently grasps the result of the processing performed between the secure device and an external reader/writer and operates in coordination with the processing.

### 2. Description of the related art

In recent years, IC cards have been widely used for electronic settlement cards, commuter passes, and prepaid railway tickets with charging functions. Lately, with the enhancement of the microfabrication technology, IC cards with a relatively large capacity are available on the market. Such IC cards, with a plurality of card applications to execute card services stored therein, can be used as multi-application cards supporting a plurality of applications.

Communications systems for IC cards include a contact communications system where a touch of a reader/writer on the electric contact of an IC card allows reading/writing of recorded information and a con-contact communications system where wireless communications are used to exchange information rather than a physical contact with the reader/writer.

International Standards for IC cards include ISO7816 concerning contact communications and ISO14443 concerning contactless communications. These international standards describe that data exchange performed between a card application on an IC card and a terminal application on a reader/writer is based on a "command" transmitted from the terminal application to the card application and a "response" transmitted from the card application to the terminal application. An APDU (Application Protocol Data Unit) used to specify the format of a command or a response has been specified by the standards. Thus, the IC card can operate only in a passive fashion.

Recently, it is a common practice to mount a chip-shaped IC card capable of both contact communications and contactless communications into a cell phone and use the cell phone in place of an electronic wallet or a commuter pass. For example, in a case in which the information on a prepaid railway ticket is recorded onto an IC card, when the user operates some keys on his/her cell phone to instruct a display of remaining amount, the instruction is input to the IC card from the cell phone over contact communications, and the remaining amount information on the IC card is read and displayed on the screen of the cell phone. When the cell phone is placed against an automatic ticket gate in a station, an instruction of reading or overwriting the information data is input to the IC card on the cell phone over contactless communications, and the remaining amount data recorded on the IC card is updated in accordance with this instruction.

Japanese Patent Laid-Open No. 2003-60748 describes an apparatus which uses the display unit on the cell phone to display a successful completion of card functions when contactless communications by way of the IC card mounted on the cell phone is successfully made. The IC card starts a card application specified by an external reader/writer among the plurality of card applications, performs card-based communications (contactless communications) with the external reader/writer in accordance with the service used. After successful completion of the card-based communications, the IC card transmits a notification signal to indicate the end of communications and the application ID to the controller of the cell phone. The controller, upon receiving the information, outputs predetermined control information in accordance with the application ID from the display unit of the cell phone.

A cell phone on which an IC card is mounted includes a keypad, a display, a communications function, and an application execution function. By using such cell phone functions in coordination with the card processing by way of contactless communications by the IC card, it is possible to implement a service with enhanced convenience, operability and functionality. The apparatus described in Japanese Patent Laid-Open No. 2003-60748 aims at providing display in coordination with the contactless communications processing of the IC card by using the display unit of the cell phone.

An IC card conforming to corresponding international standards is capable of performing a passive operation of returning a response to a command received over contactless communications from an external reader/writer. Such an IC card itself cannot transmit a notification signal or an application ID to the controller of a cell phone, unlike an IC card described in Japanese Patent Laid-Open No. 2003-60748.

The inventors have examined various measures which, even in a case in which an IC card satisfying corresponding international standards is mounted on a cell phone, causes the cell phone to perform an operation in coordination with the contactless communications between the IC card and an external reader/writer even. The measures include the methods (1) and (2) described below.

### (1) Prior activation of terminal application

When a cell phone on which an IC card is mounted is placed against an external reader/writer, the card application specified by the external reader/writer among the plurality of card applications stored in the IC card is activated, thus starting contactless communications for use of the card between the IC card and the external reader/writer. The problem is that an IC card conforming to corresponding international standards cannot originate a signal notifying the end of the contactless communications to the cell phone.

Thus, according to the invention, the cell phone keeps transmitting a polling signal to the IC card over contact communications so as to allow the cell phone to detect the end of the contactless communications. The IC card, receiving the polling signal for supervising the processing state, transmits a response "under communications" in case contactless communications are in progress, or a response "not under communications" in case contactless communications are not in progress. This allows the end of contactless communications to be detected.

The cell phone, detecting the end of contactless communications of the IC card, transmits a command instructing the card applications, which have processed use of the card, to return a card processing result. When the response data is received, the card processing result can be displayed on the cell phone.

A plurality of card applications created by each service provider stored in an IC card supporting multi-applications requires authentication of an access and the authentication system employed differs between service providers (card applications). Moreover, the authentication systems are not made public in general because of a need to maintain security. Thus, a cell phone has difficulty in transmitting a command to a card application which has executed card usage processing.

According to the method (1), a service provider creates a terminal application (an application capable of making an access to a card application) which works in coordination with a card application and stores the terminal application into a cell phone. The user expects a card application specified by an external reader/writer before placing a cell phone against the external reader/writer, and previously activates a corresponding terminal application.

By doing so, when a cell phone has detected the end of contactless communications of an IC card, the terminal application previously activated may request a card processing result from the card application which has executed the card usage processing and show the obtained processing result on the display of the cell phone.

### (2) Attempt to acquire information from all card applications

The cell phone which supervises the processing state of an IC card, detecting the end of contactless communications of the IC card, attempts to acquire information on the card processing result from all card applications. By doing so, it is possible to acquire the information on the card usage result from the card application which has actually executed the card usage processing and show the information on the display of the cell phone.

The method "(1) Prior activation of terminal application" forces the user to activate a terminal application, which increases the workload of the user and is inconvenient. The user may not know the terminal application to be activated. The method "(2) Attempt to acquire information from all card applications" attempts to acquire information from card applications which have not executed card usage processing. This retards the processing. Additionally, this method separately requires a measure to support various authentication systems for card applications.

### SUMMARY OF THE INVENTION

The invention solves the problems and has as an object to provide a secure device capable of transmitting the information on processing performed in response to an instruction from an external reader/writer to an information processing apparatus in an efficient manner in accordance with international standards, and an information processing apparatus capable of performing an operation in coordination with the processing of the secure device based on the information acquired from the secure device.

The invention provides a secure device comprising a first communications unit, a second communications unit and one or more card function units (card applications), characterized in that the secure device includes an information passing units accessible to all card function unit, that the card function unit writes to the information passing unit transmit information generated based on an instruction from an external reader/writer received via the first communications unit, and that the information passing unit passes the transmit information to the information processing apparatus based on an instruction from information processing apparatus received via the second communications unit.

The information processing apparatus, after completion of card processing of the first communications unit of the secure device, may access the information passing unit of the secure device to acquire information on the card processing. The secure device passes the transmit information as instructed by the information processing apparatus. This processing conforms to corresponding international standards.

The secure device of the invention is characterized in that the first communications unit performs contactless communications and that the second communications unit performs contact communications.

According to the invention, the transmit information passed to the information processing apparatus includes information to identify the processing unit (terminal application) of the information processing apparatus and information to be passed to the processing unit, or further information to identify the card function unit.

Thus, it is not necessary for the user to previously activate a terminal application.

The invention provides an information processing apparatus supporting the secure device, characterized in that the information processing apparatus comprises middleware which accesses the information passing unit of the secure device via the second communications unit of the secure device and acquires/interprets the transmit information retained by the information passing unit and that the middleware performs control so as to allow the processing requested by the transmit information to be performed using the resources of the information processing apparatus.

The middleware acquires the transit information when the processing start operation is performed.

By using the middleware, it is possible to efficiently acquire transmit information generated by a card function unit without the knowledge of a method to access an individual card function unit (card applications) stored in the secure device and a corresponding authentication method.

The invention provides the information processing apparatus supporting the secure device, characterized in that the information processing apparatus comprises a state supervision unit for supervising the end of communications by way of the first communications unit of the secure device or supervising from an electromagnetic field which disables communications by the first communications unit of the secure device and middleware which, once the state supervision unit has detected the end of the communications or exits from the electromagnetic field, accesses the information passing unit of the secure device via the second communications unit of the secure device and acquires/interprets the transmit information retained by the information passing unit and that the middleware performs control so as to allow the processing requested by the transmit information to be performed using the resources of the information processing apparatus.

As a result, the operation coordinated with the card processing of the secure device is performed by using the resources of the information processing apparatus.

The secure device of the invention is attached to the information processing apparatus in a detachable fashion or integrally embedded into the information processing apparatus.

The secure device of the invention is capable of transmitting the information on processing performed in response to an instruction from an external reader/writer to an information processing apparatus in an efficient manner in accordance with international standards. The information processing apparatus of the invention can be used to efficiently acquire transmit information generated by a card function unit without the knowledge of a method to access an individual card function unit (card applications) stored in the secure device and a corresponding authentication method.

The information processing apparatus can perform an operation coordinated with card processing of the secure device by using the resources of the information processing apparatus, that is, a keypad, a display, a communications function and a terminal application, based on the information acquired from the secure device.

This enhances the convenience, operability and functionality of the secure device and provides more sophisticated services by way of a general IC card conforming to international standards.

### BRIEF DESCRIPTION OF THE DRAWINGS

Fig. 1 is a block diagram showing the configuration of a cell phone and an IC card according to the first embodiment of the invention;
Fig. 2 is a sequence chart showing the first coordinated operation of the cell phone, the IC card and an external reader/writer (where the user's PIN input is prompted) according to the first embodiment of the invention;
Fig. 3 is a sequence chart showing the second coordinated operation of the cell phone, the IC card and the external reader/writer (where the user's PIN input is prompted) according to the first embodiment of the invention;
Fig. 4 is a sequence chart showing the second coordinated operation of the cell phone, the IC card and the external reader/writer (where a charge application is activated) according to the first embodiment of the invention;
Fig. 5 is a sequence chart showing the second coordinated operation of the cell phone, the IC card and the external reader/writer (where state supervision polling is continuously performed) according to the first embodiment of the invention;
Fig. 6 is a block diagram showing the configuration of a cell phone and an IC card according to the second embodiment of the invention;
Fig. 7 is a block diagram showing the configuration of the information storage section of an IC card according to the second embodiment of the invention; and
Fig. 8 is a sequence chart showing the operation of the cell phone, the IC card and the external reader/writer according to the second embodiment of the invention.

### DESCRIPTION OF THE PREFERRED EMBODIMENTS

### (First embodiment)

In the first embodiment of the invention, a case will be described where the secure device is an IC card equipped with both the contact communications function and the contactless communications function and the information processing apparatus is a cell phone. The IC card attached to the cell phone exchanges information with the cell phone over contact communications. In case the cell phone is placed against an external reader/writer so that the IC card will enter the communication area of the external reader/writer, the IC card exchanges information with the external reader/writer over contactless communications.

The IC card is equipped with a dedicated application (information passing card application) for passing/receiving information to/from the cell phone. From any card application stored in the IC card, information may be written into the information passing card application. In the cell phone, middleware is in charge of passing/receiving information to/from the information passing card application.

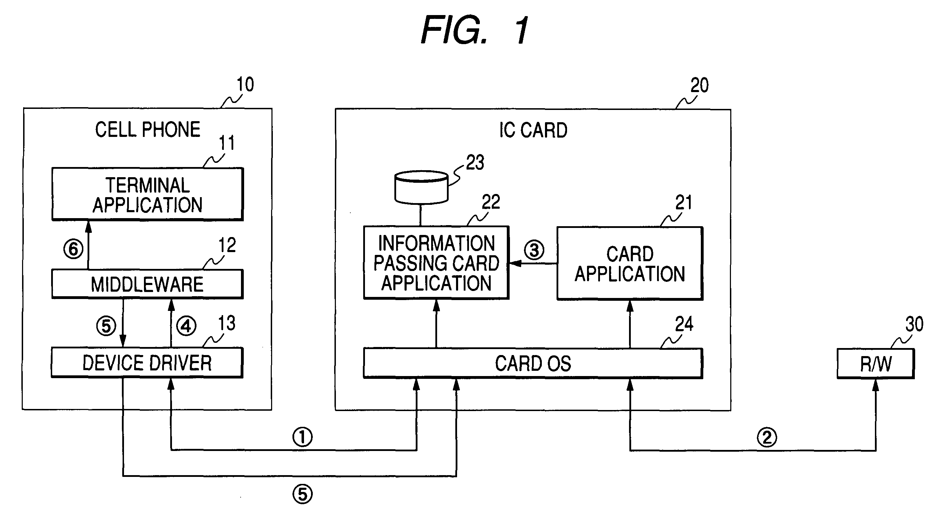

Fig. 1 schematically shows the configuration of a cell phone 10, an IC card 20 and an external reader/writer 30. The IC card 20 comprises a plurality of card applications 21 for executing various services created by a service provider, an information passing card application 22 for centrally passing/receiving, information to/from the cell phone 10, an information storage section 23 for temporarily storing information to be passed, and a card OS 24 for executing communications and file management. The cell phone 10 comprises a terminal application 11 for executing an operation coordinated with the processing of the card application 21, middleware 12 for performing an information passing service with the terminal application 11, and a device driver 13 for controlling the operation of the cell phone 10.

All card applications 21 of the IC card 20 can access the information passing card application 22. From the external reader/writer 20, the information transmitted to the card application 21 can be written into the information storage section 23 of the card application 22.

The information passing card application 22 can be implemented using a sharable interface in the case of for example a Java (R) card whose card applications are created in the Java (R) language. On an IC card, a firewall is used to separate card applications in order to assure safe coexistence of card applications. The sharable interface provides an access to a card application without being interrupted by the firewall.

The middleware 12 of the cell phone 10, once mutually authenticated with the information passing card application 22, can make an unlimited access to the information passing card application 22.

In Fig. 1, the order of processing performed in coordination by the cell phone 10, the IC card 20 and the external reader/writer 30 is indicated by encircled numbers. The user operates the cell phone to instruct a start of processing. The middleware 12 of the cell phone 10 requests the device driver 13 to perform state supervision of the IC card 20 by way of polling ①. When the user places the cell phone 10 against the external reader/writer 30, the IC card 20 is activated. The card application 21 specified by the external reader/writer 30 executes the processing instructed by the external reader/writer 30 ②. The card application 21 writes, into the information passing card application 22, the information which should now be transmitted to the cell phone 10 in accordance with the processing ③.

This information includes the name of the terminal application to be activated (including middleware), information to be passed to this terminal application, and the ID of the requested card application.

The device driver 13 of the cell phone 10, which is supervising the state of the IC card 20, detecting the end of contactless communications of the IC card 20 and transmits a processing end notification to the middleware 12. The middleware 12, after mutual authentication with the information passing card application 22, accesses the information passing card application 22 and acquires the information retained therein. The middleware 12 activates the specified terminal application 11 based on the information acquired from the information passing card application 22. The terminal application 11 performs the specified processing. When the middleware 12 is specified, the middleware itself performs the processing (6).

In this way, the IC card of this apparatus mounts the information passing card application 22, so that the middleware 12 of the cell phone 10 accesses the information passing card application 22 and acquires the information which accompanies the processing, once the processing by the contactless communications of the IC card 20 is over. Thus, the apparatus is free from a situation where the access destination is not known. Inefficient processing of accessing all card applications 21 is not required anymore.

The middleware 12 of the cell phone 10 has only to undergo authentication with the information passing card application 22 and need not recognize the authentication systems of the individual card applications 21.

The information acquired from the information passing card application 22 includes the information of the terminal application to be activated. It is thus possible to identify the terminal application from this information. The user need not previously activate a terminal application.

The information passing card application 22 of the IC card 20, receiving an instruction from the middleware 12 of the cell phone 10, returns the retained information to the middleware 12. This operation of the IC card 20 conforms to international standards.

While the device driver 13 of the cell phone 10 detects the end of contactless communications of the IC card 20 and communicates the event to the middleware 12 in the above example, the device driver 13 may detect an exit from the communication area of the external reader/writer 30, that is, a state where the IC card has left the electromagnetic field to enable contactless communications and contactless communications is no longer available, and communicate the event to the middleware 12.

A user-based instruction to start polling may be made by a push on a specific key on the cell phone 10 or by shaking the cell phone 10 where an acceleration sensor is embedded.

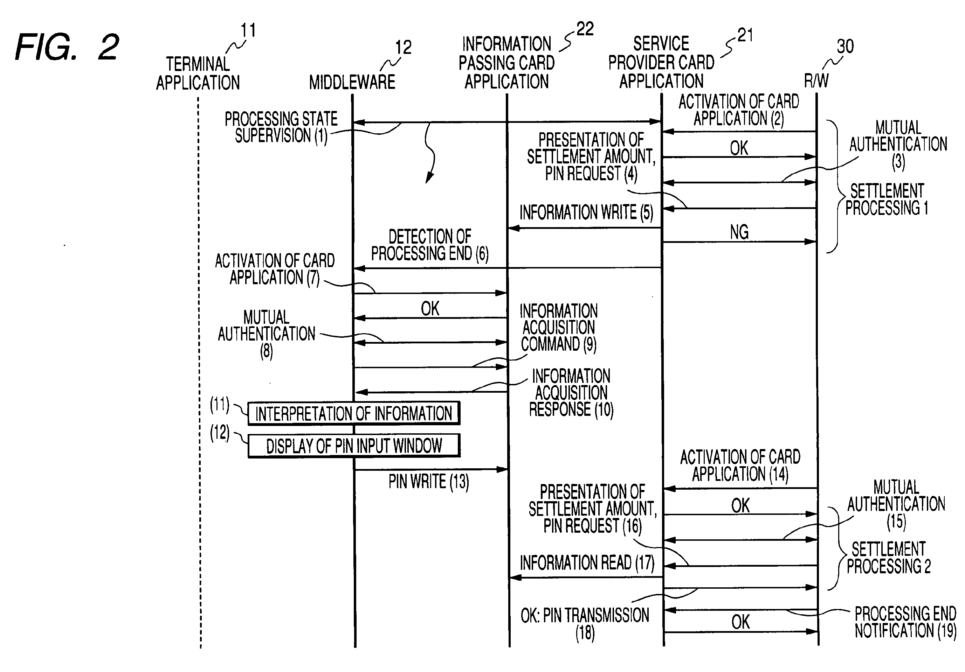

Fig. 2 shows a processing flow where the cell phone 10, the IC card 20 and the external reader/writer 30 as a settlement terminal work in coordination to request the user to enter a personal identification number (PIN) required for credit settlement. The middleware 12 of the cell phone 10 supervises the state of the IC card 20 (1). When the cell phone 10 is placed against the external reader/writer 30, the external reader/writer 30 specifies a card application 21 and instructs activation of the same (2). Receiving an activation OK response from the card application 21, the external, reader/writer 30 performs mutual authentication with the card application 21 (3) and requests a PIN together with the information on the settlement amount to be presented to the cell phone 10 (4).

The card application 21 tries to read the PIN from the information passing card application 22. The information passing card application 22 does not retain the PIN. Thus, the name of a requesting terminal application (middleware 12 in this example), a PIN request, information on the settlement amount and the card application ID of the requester are written into the information passing card application 22 (5) and an NG in response to the PIN request is returned to the external reader/writer 30. The settlement processing 1 thus terminates unsuccessfully.

The middleware 12 of the cell phone 10, detecting the end of processing of the IC card 20 (6), instructs activation of the information passing card application 22 (7). Receiving an activation OK response from the information passing card application 22, the middleware 12 performs mutual authentication with the information passing card application 22 (8) and transmits an information acquisition command to the information passing card application 22 (9). Receiving the command, the information passing card application 22 returns to the middleware 12 a response including the information retained by the information passing card application 22 as response data (10). The middleware 12 interprets the acquired information (11) and shows the settlement amount on the display of the cell phone 10 as well as displays a PIN input window (12). When the user operates the keypad of the cell phone 10 to enter a PIN, the middleware 12 writes the PIN into the information passing card application 22 (13).

When the user places the cell phone 10 against the external reader/writer 30 again, the external reader/writer 30 activates the card application 21 (14), performs mutual authentication (15), and presents the settlement amount and requests a PIN (16). The card application 21 accesses the information passing card application 22 to read the PIN retained therein (17), and transmits to the external reader/writer 30 an OK response to the PIN request with PIN information included (18). Matching of the PIN is made by a center connected to the external reader/writer 30. In case the matching is successful, the settlement processing is executed and a processing end notification is transmitted from the external reader/writer 30 to the card application 21 (19). The settlement processing 2 terminates successfully.

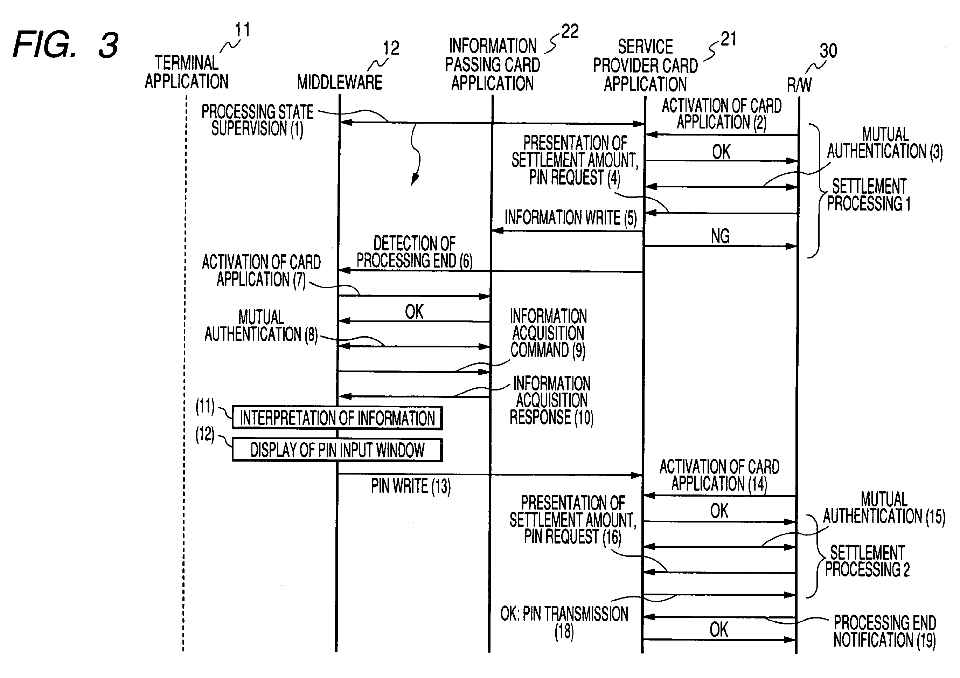

Writing of PIN by the middleware 12 (13) may be directly made into the requesting card application 21 based on a requesting card application ID included in the information acquired from the IC card 20, as shown in Fig. 3. In this case, the card application 21 can transmit a PIN to the external reader/writer 30 without accessing the information passing card application 22 in response to the PIN request (16) received from the external reader/writer 30 (18).

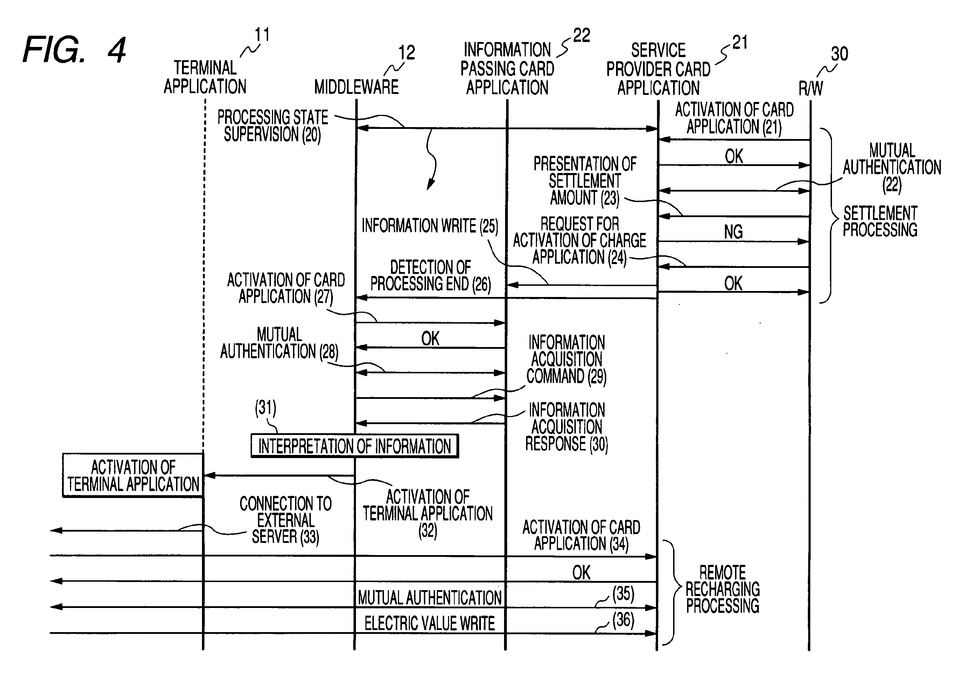

Fig. 4 shows a processing flow of a case where an IC card 20 without an amount necessary for settlement remaining is recharged with an electronic value from an external server. The middleware 12 of the cell phone 10 supervises the state of the IC card 20 (20). When the cell phone 10 is placed against the external reader/writer 30, the external reader/writer 30 specifies a card application 21 and instructs activation of the same (21). Receiving an activation OK response from the card application 21, the external reader/writer 30 performs mutual authentication with the card application 21 (22) and presents a settlement amount (23). The IC card 20 is not recharged with the amount necessary for settlement. When an NG is returned from the card application 21, the external reader/writer 30 requests activation of a terminal application (charge application) which performs recharging of the IC card 20 (24). The card application 21 writes the name of a requesting terminal application, a charge request and the card application ID of the requester are written into the information passing card application 22 (25) and an OK in response to the request for activation of a charge application is returned to the external reader/writer 30. The settlement processing thus terminates unsuccessfully.

The middleware 12 of the cell phone 10, detecting the end of processing of the IC card 20 (26), instructs activation of the information passing card application 22 (27). Receiving an activation OK response from the information passing card application 22, the middleware 12 performs mutual authentication with the information passing card application 22 (28) and transmits an information acquisition command to the information passing card application 22 (29). Receiving the command, the information passing card application 22 returns a response to the middleware 12 including the information retained by the information passing card application 22 as response data (30). The middleware 12 interprets the acquired information (31) and activates a specified terminal application (charge application) 11 and instructs charge processing to the requesting card application (32).

The activated terminal application 11 utilizes the communications function of the cell phone 10 to connect to an external server to execute recharging of the IC card 20 and communicates necessary information (33). The external reader/writer instructs activation of the requesting card application 21 of the IC card 20 (34). Receiving an activation OK response from the requesting card application 21, the external reader/writer performs mutual authentication with the requesting card application 21 (35), writes an electronic value into the requesting card application 21 (35), and terminates the remote recharging.

When the user places a cell phone including an IC card against an automatic ticket gate to pass through the gate, an external reader/writer of the automatic ticket gate may pass train delay information to the IC card and cause the delay information to be presented on the display of the cell phone.

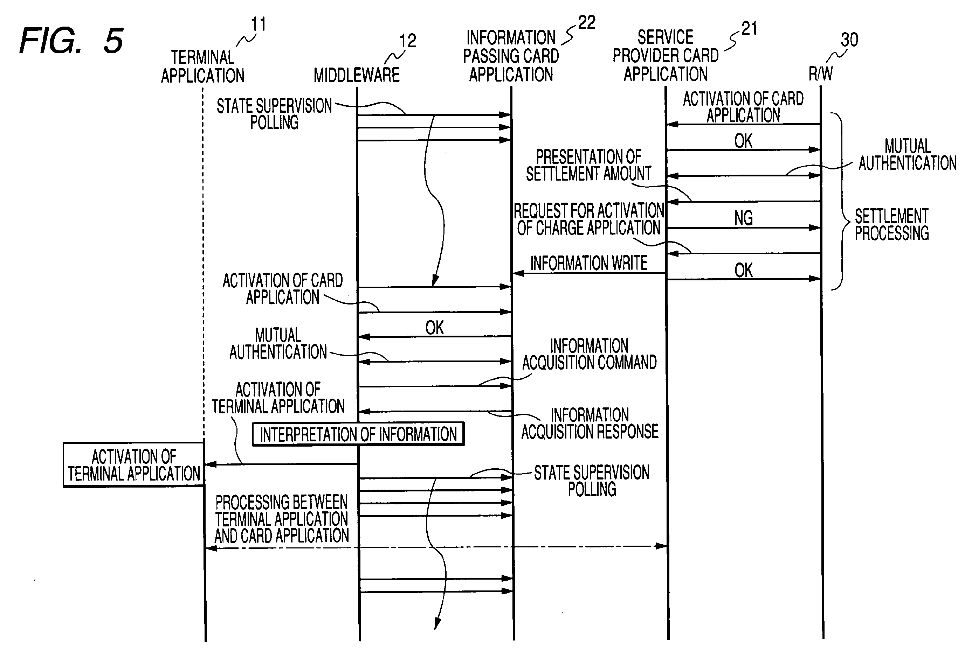

In order to reduce the workload of the user who instructs a start of polling, polling may be continuously performed for card state supervision for supervising the entry into or exit from the electromagnetic field where contactless communications are allowed. Fig. 5 shows a processing flow of a case where a polling for card state supervision is continuously performed by the middleware 12 via the device driver 13. By continuously performing polling for card state supervision, the middleware 12 acquires information from the information passing card application 22 and interprets the information once the contactless communications of the IC card 20 are over.

There may be a case where another card application 21 is activated by the external reader/writer 30 a processing is executed and information is written into the information passing card application 22 or the same card application is activated again, processing is executed and information is written into the information passing card application 22, while the middleware 12 which has detected the end of contactless communications is reading information from the information passing card application and executing interpretation. In this case, the cell phone 10 is reading the initial information and interpreting the same, which may lead to trouble. To avoid this situation, the following methods (1) and (2) are proposed.
(a) In case the information storage section 23 includes a single data input area (buffer), the information passing card application 22 includes a flag to represent "Processing by middleware under way" and sets the flag when the middleware 12 reads information from the information passing card application 22. The card application 21 which has requested writing of information receives an information write failure notification from the information passing card application 22 while this flag is ON.
(b) In case the information storage section 23 includes more than one data input area (buffer), the information passing card application 22 includes an area to indicate the data area number being processed by the middleware 12. The information passing card application 22, receiving a request for writing information from the card application 21, references this area and writes the information into an area having a number next to that of the area being processed by the middleware 12. The middleware 12 sequentially interprets and processes the information written into the areas.

In this way, this apparatus can use a terminal application mounted on a cell phone, a keypad, display and communications function of the cell phone to enhance the convenience, operability and functionality of an IC card, thereby implementing more sophisticated services by using a general IC card conforming to international standards.

While the IC card is attached to a cell phone in this example, the invention is not limited thereto. Instead of a cell phone, a PDA (Personal Digital Assistant), a mail terminal, a compact PC, a game machine or other information processing apparatus can be used. The IC card may be any secure device so long as it can operate a card application in response to an APDU-format command. The shape of the secure device may be a card or a chip, or may be embedded into an information processing apparatus.

### (Second embodiment)

The second embodiment of the invention pertains to a case where the information written into an information passing card application by a card application which has performed contactless communications is read by middleware as instructed by the user, and is displayed, interpreted and processed thereafter.

The user may check the information written into the information passing card application with an arbitrary timing, or skip the check if unnecessary.

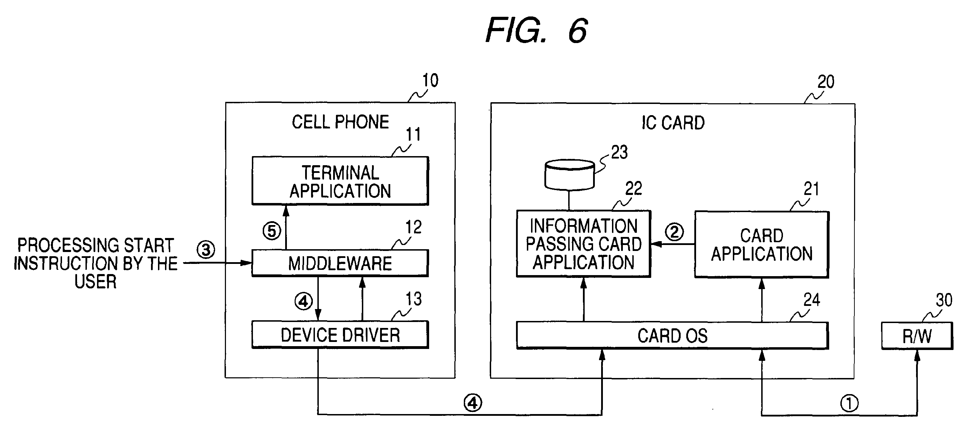

The configuration of the cell phone and the IC card in the second embodiment is shown in Fig. 6. The configuration blocks of the cell phone 10 and IC card 20 are the same as those in the first embodiment (fig. 1).

In Fig. 6, the order of processing performed by the cell phone 10, the IC card 20 and the external reader/writer 30 is indicated by encircled numbers. When the user places the cell phone 10 against the external reader/writer 30, the IC card 20 is activated and the card application 21 specified by the external reader/writer 30 executes the processing instructed by the external reader/writer 30 (1). The card application 21 writes into the information passing card application 22 the information which should now be transmitted to the cell phone 10 in accordance with the processing (2).

This information includes the name of the terminal application to be activated (including middleware), information to be passed to this terminal application, and the ID of the requested card application.

The user wishing to check the result of the contactless communications processing performs an operation for instructing the start of processing, for example shaking the cell phone 10, with an arbitrary timing (3). In response to this operation, the middleware 12 performs mutual authentication with the information passing card application 22, accesses the information passing card application 22 and acquires information retained therein (4). The middleware 12 activates the specified terminal application 11 based on the information acquired from the information passing card application 22. The terminal application 11 executes the specified processing. When the middleware 12 is specified, the middleware 12 itself executes the processing (5).

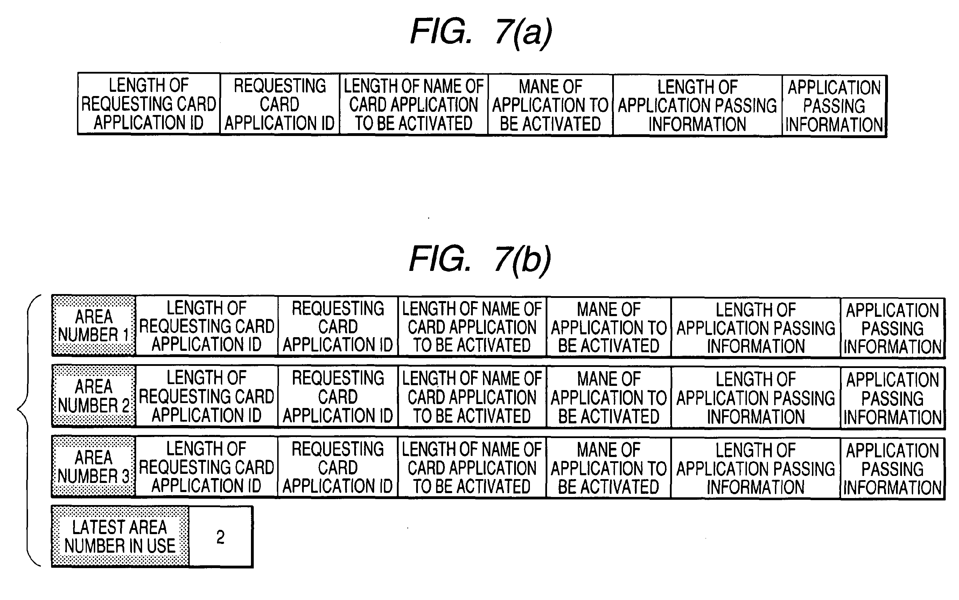

The information storage section 23 managed by the information passing card application 22 includes a single data input area (buffer) (a) or more than one data input area (buffer) (three in this example) (b), as shown in Fig. 7. In case the information storage section 23 includes a single data input area (buffer) (a), the area is always overwritten. Thus, the information storage section 23 stores only the information on the latest contactless communications. When the user checks the result of contactless communications, the result of the latest contactless communications is displayed.

In case the information storage section 23 includes more than one data input area (buffer) (b), the areas are sequentially used to store the information on the latest contactless communications processing. The information in these data input areas are overwritten with the information on the latest contactless communications processing in turn. A number indicating the data input area which stores the information on the latest contactless communications processing is written is stored.

Thus, in this example, the results of the latest contactless communications processing to the nth (n being the number of data input areas) contactless communications processing in the past can be displayed, interpreted and processed. Display operation in this case may be made per instruction of the user in reverse chronological order, for example, the latest processing result is displayed by the user's display instruction, and the second latest result is displayed by the user's next display instruction. Or, all processing results stored in the storage section 23 may be displayed all at once by the user's display instruction.

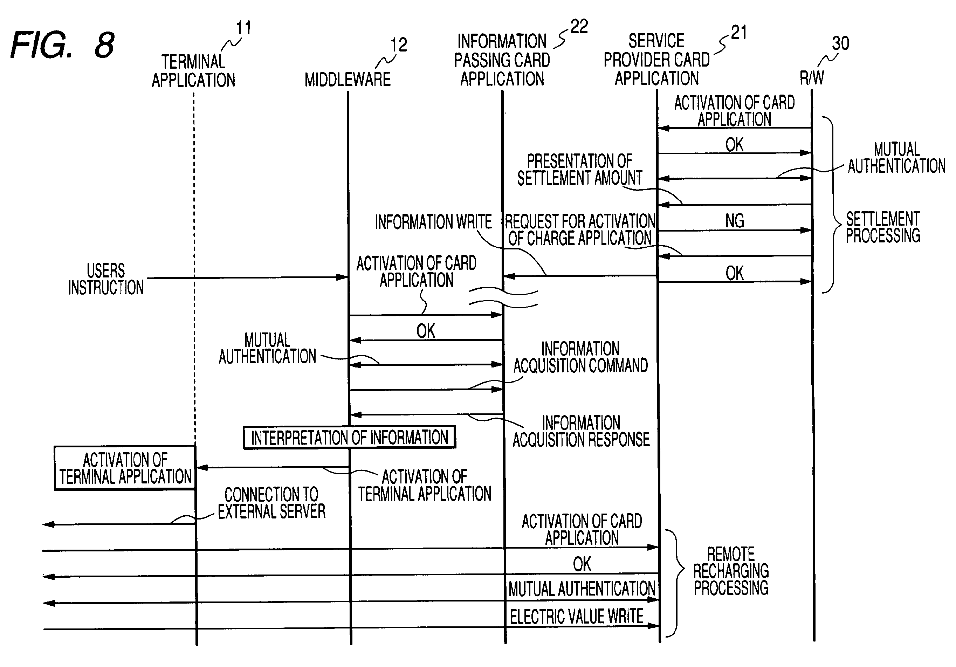

Fig. 8 shows a processing flow of a case where the processing shown in Fig. 4 (processing where the IC card 20 without an amount necessary for settlement remaining) is performed in accordance with the system of the second embodiment. In this example, the settlement processing made by placing the cell phone 10 against the external reader/writer 30 and the subsequent processing are made separately and the latter is started as triggered by the user's instruction.

In this way, in the system of the second embodiment, information stored into the information storage section 23 of the information passing card application 22 by the card application 21 is read by the middleware 12 as triggered by an instruction of the user and interpreted then processed. The user can select whether to perform this processing. Unlike the first embodiment, an prior state supervision instruction by the user is made unnecessary, which enhances the convenience.

In this example, the IC card 20 is equipped with the information passing card application 22 and the middleware 12 of the cell phone 10 accesses the IC card 20 to acquire information written by each card application 21. Thus, the middleware 12 can efficiently acquire information from each card application 21 without the knowledge of a method to access or authenticate each card application 21.

The secure device and information processing apparatus of the invention may be used in applications where the card functions of various cards including a settlement card, a traffic pass and a train ticket, a ticket to a play, a medical card, and a card issued by an administrative body.

## Claims

1. A secure device for passing information to an information processing apparatus, said secure device comprising:
a first communications unit;
a second communications unit;
at least one card function unit; and
a information passing unit accessible to each of said at least one card function unit;
wherein each of said at least one card function unit is operable to write a transmit information generated based on an instruction from an external reader/writer received via said first communications unit to said information passing unit; and
said information passing unit is operable to pass the transmit information to the information processing apparatus based on an instruction from the information processing apparatus received via said second communications unit.

2. The secure device according to claim 1,
wherein said first communications unit is operable to perform contactless communications and said second communications unit is operable to perform contact communications.

3. The secure device according to claim 1,
wherein the transmit information includes information to identify a processing unit of the information processing apparatus and information to be passed to the processing unit.

4. The secure device according to claim 3, wherein the transmit information further includes information to identify said at least one card function unit.

5. An Information processing apparatus including the secure device according to claim 1, said information processing apparatus comprising:
a middleware operable to access the information passing unit of the secure device via the second communications unit of the secure device and acquires the transmit information retained by said information passing unit;
wherein said middleware is operable to perform control so as to allow the processing requested by the transmit information to be performed using said information processing apparatus.

6. The information processing apparatus according to claim 5, wherein said middleware is operable to acquire the transit information when the processing operation is performed.

7. An information processing apparatus including the secure device according to claim 1, said information processing apparatus comprising:
a state supervision unit operable to supervise an end of communication by the first communications unit of the secure device; and
a middleware operable to, after said state supervision unit has detected the end of the communication, access the information passing unit of the secure device via the second communications unit of the secure device and acquires the transmit information retained by said information passing unit;
wherein said middleware is operable to perform control so as to allow the processing requested by the transmit information to be performed using said information processing apparatus.

8. An information processing apparatus including the secure device according to claim 1, said information processing apparatus comprising:
a state supervision unit operable to supervise an exit from an electromagnetic field which disables a communication by the first communications unit of the secure device; and
a middleware operable to, after said state supervision unit has detected the exit from the electromagnetic field, access the information passing unit of the secure device via the second communications unit of the secure device and acquires the transmit information retained by said information passing unit; and
wherein said middleware is operable to perform control so as to allow the processing requested by the transmit information to be performed using said information processing apparatus.

9. The information processing apparatus according to claim 5, wherein the secure device is attached to said information processing apparatus in a detachable fashion.

10. The information processing apparatus according to claim 7, wherein the secure device is attached to said information processing apparatus in a detachable fashion.

11. The information processing apparatus according to claim 8, wherein the secure device is attached to said information processing apparatus in a detachable fashion.

12. The information processing apparatus according to claim 5, wherein the secure device is integrally embedded into said information processing apparatus.

13. The information processing apparatus according to claim 7, wherein the secure device is integrally embedded into said information processing apparatus.

14. The information processing apparatus according to claim 8 , wherein the secure device is integrally embedded into said information processing apparatus.
